# EUROPÄISCHE PATENTSCHRIFT

(11) **EP 1 554 517 B1**
(45) Veröffentlichungstag und Bekanntmachung des Hinweises auf die Patenterteilung: **30.04.2008**
(21) Anmeldenummer: 03773637.8
(22) Anmeldetag: 30.09.2003
(51) Int. Cl.: F16L 37/252

(54) **HALTERUNG FÜR EIN MIT EINEM FLUID ZU VERSORGENDES WERKZEUG UND MIT EINEM FLUID ZU VERSORGENDES WERKZEUG**
HOLDING DEVICE FOR A TOOL TO BE SUPPLIED WITH A FUEL AND TOOL TO BE SUPPLIED WITH A FUEL
SUPPORT POUR OUTIL A ALIMENTER EN FLUIDE ET OUTIL A ALIMENTER EN FLUIDE

(30) Priorität: 25.10.2002 DE 10249708
(43) Veröffentlichungstag der Anmeldung: 20.07.2005
(73) Patentinhaber: Dürr Ecoclean GmbH, 70794 Filderstadt (DE)
(72) Erfinder: KLINKHAMMER, Norbert, 52159 Roetgen (DE)
(74) Vertreter: Hörner, Andreas
(86) Internationale Anmeldenummer: PCT/EP2003/010831
(87) Internationale Veröffentlichungsnummer: WO 2004/038274

(56) Entgegenhaltungen:
- FR-A- 852 979
- US-A- 3 858 910

## Beschreibung

Die vorliegende Erfindung betrifft eine Halterung für ein mit einem Fluid zu versorgendes Werkzeug, insbesondere ein Wasserwerkzeug.

Ferner betrifft die vorliegende Erfindung eine Kombination aus einer solchen Halterung und einem in einer solchen Halterung zu halternden, mit einem Fluid zu versorgenden Werkzeug, insbesondere einem Wasserwerkzeug.

Solche mit einem Fluid zu versorgende Werkzeuge, insbesondere Wasserwerkzeuge, können beispielsweise als Sprühlanzen ausgebildet sein, die mit einer Austrittsdüse für den Austritt des zugeführten Fluids versehen sind und beispielsweise dazu dienen können, Werkstücke, auf welche der aus der Austrittsdüse austretende Fluidstrahl gerichtet wird, zu entgraten und/oder zu reinigen.

Insbesondere betrifft die vorliegende Erfindung solche Werkzeuge, denen das Fluid unter einem hohen Druck von mindestens 100 bar, vorzugsweise von mindestens 1000 bar, zugeführt wird. Mit solchen Höchstdruck-Fluidwerkzeugen kann eine besonders gute Entgrat- und Reinigungswirkung erzielt werden.

Bekannte Höchstdruck-Fluidwerkzeuge der vorstehend genannten Art werden durch Verschraubung mit der Werkzeughalterung, die an eine Fluidzuführleitung angeschlossen ist, verbunden. Dabei kommen zum Beispiel Druckring und Druckschraube oder Halbschalen mit Überwurfmutter zum Einsatz.

Bei einer Halterung, an die das Fluidwerkzeug angeschraubt werden muss, ist zur Herstellung der Verbindung zwischen dem Werkzeug und der Halterung ein geeignetes Verbindungswerkzeug, beispielsweise ein Schraubenschlüssel, erforderlich. Außerdem muss das Anschrauben des Werkzeugs mit großer Sorgfalt geschehen, da die Halterung des Fluidwerkzeugs oft an empfindlichen teuren Bauteilen wie beispielsweise Drehantrieben oder Robotern angeordnet ist.

Die FR 852 979 A offenbart eine Schnellkupplung zwischen zwei Leitungen für ein unter Druck stehendes Fluid, die eine Halterung mit einer Aufnahme zum Aufnehmen eines Anschlussstücks, ein Dichtelement, das in einer Arbeitsstellung an dem Anschlussstück anliegt, und eine Vorspanneinrichtung zum Vorspannen des Dichtelements gegen das Anschlussstück in der Arbeitsstellung umfasst.

Der vorliegenden Erfindung liegt die Aufgabe zugrunde, eine Halterung für ein mit einem Fluid zu versorgendes Werkzeug, insbesondere ein Wasserwerkzeug, zu schaffen, welche es erlaubt, das in der Halterung zu halternde Werkzeug einfach, rasch und zuverlässig mit der Halterung zu verbinden.

Diese Aufgabe wird durch eine Halterung nach Anspruch 1 gelöst.

Die erfindungsgemäße Lösung erlaubt es, eine zuverlässig abdichtende Verbindung zwischen der Halterung und dem Werkzeug herzustellen, ohne dass hierfür eine Verschraubung des Werkzeugs mit der Halterung erforderlich ist.

Die Verbindung zwischen dem Werkzeug und der erfindungsgemäßen Halterung kann von Hand hergestellt werden, ohne dass hierfür ein Verbindungswerkzeug erforderlich ist.

Durch den Wegfall der Verschraubung des Werkzeugs mit der Halterung tritt auch keine mechanische Belastung des Werkzeugs oder des Bauteils, an welchem die Halterung angeordnet ist, auf.

Durch die erfindungsgemäße Lösung wird eine Halterung mit einem von Hand lösbaren Schnellverschluß geschaffen, welcher insbesondere auch für Hochdruck-Fluidwerkzeuge, denen das Fluid unter einem hohen Druck von mindestens 100 bar, vorzugsweise von mindestens 1000 bar, zugeführt wird, geeignet ist.

Die erfindungsgemäße Halterung kann insbesondere während des Betriebs des Werkzeugs um ihre Längsachse gedreht werden und überträgt dann das zur Drehung des Werkzeugs erforderliche Drehmoment auf das Werkzeug.

Das Werkzeug kann in diesem Fall beispielsweise mit einem Fräskopf versehen sein, welcher durch die Drehung des Werkzeugs selbst in Rotation versetzt wird.

Das Anschlußstück kann einstückig mit einem Funktionsteil des Werkzeugs ausgebildet oder als separates Teil ausgebildet sein.

Bei der erfindungsgemäßen Halterung kann insbesondere vorgesehen sein, daß die Aufnahme so ausgebildet ist, daß das Anschlußstück in der Arbeitsstellung gegen ein Herausbewegen aus der Halterung gesichert ist.

Ferner kann vorgesehen sein, daß die Aufnahme so ausgebildet ist, daß das Anschlußstück in der Arbeitsstellung gegen ein Drehen des Anschlußstücks um seine Längsachse relativ zu der Halterung gesichert ist. Dadurch kann insbesondere dann, wenn die Halterung drehbar oder an einem drehbaren Bauteil angeordnet ist, die Drehbewegung von der Halterung auf das Werkzeug übertragen werden.

Insbesondere kann vorgesehen sein, daß das Anschiußstück in einer Einführstellung in die Halterung einführbar ist und nach dem Einführen in die Halterung durch Drehung um seine Längsachse, gegebenenfalls mit anschließender Translationsbewegung, in die Arbeitsstellung bringbar ist, in welcher das Anschlußstück gegen ein Drehen des Anschlußstücks um seine Längsachse und gegen ein Herausbewegen aus der Halterung gesichert ist.

Die Vorspanneinrichtung, welche das Dichtelement der Halterung gegen das Anschlußstück des Werkzeugs vorspannt, kann insbesondere ein Federelement umfassen.

Das Dichtelement ist vorzugsweise in der Halterung verschieblich geführt.

Insbesondere kann vorgesehen sein, daß das Dichtelement von einer Ruhestellung in seine Arbeitsstellung, in welcher das Dichtelement an dem Anschlußstück des Werkzeugs anliegt, im wesentlichen geradlinig verschiebbar ist.

Um eine fluiddichte Verbindung zwischen der Halterung und dem Werkzeug herzustellen, kann vorgesehen sein, daß das Dichtelement eine Dichtfläche aufweist, die in der Arbeitsstellung an einer Dichtfläche des Anschlußstücks anliegt.

Bei einer bevorzugten Ausgestaltung der erfindungsgemäßen Halterung ist vorgesehen, daß die Dichtfläche des Dichtelements im wesentlichen kegelstumpfförmig ausgebildet ist.

Durch die kegelstumpfförmige Ausgestaltung der Dichtfläche wird eine besonders zuverlässige Abdichtwirkung erzielt und ist ferner gewährleistet, daß das Dichtelement auch dann problemlos von dem Anschlußstück gelöst werden kann, wenn das Anschlußstück und/oder das Dichtelement beim Einführen oder während des Betriebs des Werkzeugs bleibend verformt worden sein sollte.

Als besonders günstig hat es sich erwiesen, wenn die Dichtfläche des Dichtelements einen Kegel-Öffnungswinkel von ungefähr 40° bis ungefähr 80°, vorzugsweise von ungefähr 50° bis ungefähr 70°, aufweist. Unter dem Kegel-Öffnungswinkel ist dabei das Zweifache des Winkels zu verstehen, welchen die Kegelmantelflächen mit der Kegelachse einschließen.

Bei einer besonderen Ausgestaltung der erfindungsgemäßen Halterung ist vorgesehen, daß das Dichtelement einen Fluiddurchgangskanal, der von dem dem Werkzeug zuzuführenden Fluid durchströmbar ist, aufweist.

Um eine besonders hohe Anpreßkraft des Dichtelements gegen das Anschlußstück des Werkzeugs zu erzielen, kann vorgesehen sein, daß das Dichtelement eine von dem dem Werkzeug zuzuführenden Fluid beaufschlagbare Druckfläche aufweist.

In diesem Fall ist es besonders günstig, wenn die Projektion der Druckfläche des Dichtelements auf eine zur Verschiebungsrichtung des Dichtelements senkrechte Ebene größer ist als die Projektion einer Dichtfläche des Dichtelements, mit welcher das Dichtelement an einer Dichtfläche des Anschlussstücks in der Arbeitsstellung anliegt, auf eine zur Verschiebungsrichtung des Dichtelements senkrechte Ebene.

Um einen möglichst hohen Anpressdruck des Dichtelements im Betrieb des Werkzeugs zu erzielen, ist vorteilhafterweise vorgesehen, dass die Projektion der Druckfläche des Dichtelements mindestens zweimal, vorzugsweise mindestens dreimal, so groß ist wie die Projektion der Dichtfläche des Dichtelements auf eine zur Verschiebungsrichtung des Dichtelements senkrechte Ebene.

Um das Dichtelement einfach und rasch von dem Anschlussstück des Werkzeugs lösen zu können, ist es günstig, dass die Halterung eine Bewegungseinrichtung zum Bewegen des Dichtelements von der Arbeitsstellung in eine Ruhestellung, in der das Dichtelement nicht an dem Anschlussstück anliegt, umfasst.

Eine solche Bewegungseinrichtung kann insbesondere eine Entspannungsmutter umfassen.

Eine besonders hohe Anpresskraft des Dichtelements gegen das Anschlussstück und damit eine besonders gute Abdichtwirkung während des Betriebs des Fluidwerkzeugs kann erzielt werden, wenn das Dichtelement mit einem Fluid unter einem Druck von mindestens 100 bar, vorzugsweise von mindestens 1000 bar, beaufschlagbar ist.

Der vorliegenden Erfindung liegt die weitere Aufgabe zugrunde, eine Kombination aus einer Halterung und einem mit einem Fluid zu versorgenden Werkzeug, insbesondere einem Wasserwerkzeug, zu schaffen, bei welcher das Werkzeug einfach, rasch und zuverlässig mit der Halterung für das Werkzeug verbindbar ist.

Diese Aufgabe wird durch eine Kombination nach Anspruch 15 gelöst.

Bei einer bevorzugten Ausführungsform der erfindungsgemäßen Kombination ist vorgesehen, dass das Werkzeug eine Dichtfläche aufweist, mit welcher das Werkzeug in der Arbeitsstellung an einer Dichtfläche des Dichtelements der Halterung anliegt.

Als besonders günstig hat es sich erwiesen, wenn die Dichtfläche des Werkzeugs im wesentlichen kegelstumpfförmig ausgebildet ist. Dadurch wird eine besonders gute Abdichtwirkung zwischen den Dichtflächen des Dichtelements einerseits und des Werkzeugs andererseits erzielt. Ferner ist durch diese Gestaltung der Dichtfläche gewährleistet, dass das Werkzeug auch dann problemlos von dem Dichtelement der Halterung gelöst werden kann, wenn das Werkzeug und/oder das Dichtelement der Halterung beim Einführen oder während des Betriebs des Werkzeugs bleibend verformt worden sein sollte.

Besonders vorteilhaft ist es, wenn die Dichtfläche des Werkzeugs einen Kegel-Öffnungswinkel von ungefähr 40° bis ungefähr 80°, vorzugsweise von ungefähr 50° bis ungefähr 70°, aufweist. Unter dem Kegel-Öffnungswinkel ist dabei das Zweifache des Winkels zu verstehen, welchen die Kegelmantelflächen mit der Kegelachse einschließen.

Bei einer bevorzugten Ausgestaltung der erfindungsgemäßen Kombination ist vorgesehen, dass die Dichtfläche an einem im wesentlichen kegelstumpfförmigen Endbereich des Werkzeugs angeordnet ist.

Um das Werkzeug besonders leicht in die Halterung einführen und aus der Halterung wieder entnehmen zu können, ist bei einer bevorzugten Ausgestaltung der erfindungsgemäßen Kombination vorgesehen, dass das Werkzeug einen ersten im wesentlichen zylindrischen Abschnitt mit einem ersten Durchmesser und einen zweiten im wesentlichen zylindrischen Abschnitt mit einem zweiten Durchmesser aufweist, wobei der erste zylindrische Abschnitt zwischen dem zweiten zylindrischen Abschnitt und dem im wesentlichen kegelstumpfförmigen Endbereich des Werkzeugs angeordnet ist und der zweite Durchmesser größer ist als der erste Durchmesser.

Um einen sicheren Halt des Werkzeugs in der Halterung zu erzielen, kann vorgesehen sein, dass das Werkzeug einen nicht-rotationssymmetrischen Bund umfasst, der in der Arbeitsstellung ein Hinausbewegen des Anschlussstücks des Werkzeugs aus der Halterung in der Längsrichtung des Anschlussstücks verhindert.

Ferner ist vorzugsweise vorgesehen, dass das Werkzeug einen nicht-rotationssymmetrischen Bund umfasst, der in der Arbeitsstellung ein Drehen des Anschlussstücks um dessen Längsachse relativ zu der Halterung verhindert. Dadurch kann insbesondere dann, wenn die Halterung drehbar oder an einem drehbaren Bauteil angeordnet ist, die Drehbewegung von der Halterung auf das Werkzeug übertragen werden.

Vorzugsweise liegt der Bund des Werkzeugs mit mindestens einer Anlagefläche so an einer Anlagefläche der Halterung an, dass ein Drehmoment von der Halterung auf das Werkzeug übertragbar ist.

Insbesondere kann vorgesehen sein, dass das Werkzeug so ausgebildet ist, dass es in einer Einführstellung in die Halterung einführbar und innerhalb der Halterung durch eine Drehung um einen Winkel von beispielsweise 90° um die Längsachse des Werkzeugs und gegebenenfalls eine Translationsbewegung des Werkzeugs in die Arbeitsstellung bringbar ist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Schnitt durch eine Halterung für ein mit einem Fluid zu versorgendes Werkzeug, wobei ein Anschlussstück des Werkzeugs in einer Arbeitsstellung in der Halterung aufgenommen ist;
- Fig. 2: einen schematischen Querschnitt durch die Halterung und das Werkzeug aus Fig. 1, längs der Linie 2 - 2 in Fig. 1;
- Fig. 3: einen schematischen Querschnitt durch die Halterung und das Werkzeug aus Fig. 1, längs der Linie 3 - 3 in Fig. 1;
- Fig. 4: einen der Fig. 3 entsprechenden schematischen Querschnitt durch die Halterung und das Werkzeug, wobei sich das Werkzeug in einer Einführstellung befindet;
- Fig. 5: einen schematischen Schnitt durch die Halterung aus Fig. 1, bei entnommenem Werkzeug;
- Fig. 6: einen schematischen Schnitt durch das Werkzeug aus Fig. 1;
- Fig. 7: einen schematischen Längsschnitt durch eine Halteklaue der Halterung aus Fig. 1;
- Fig. 8: einen schematischen Querschnitt durch die Halteklaue aus Fig. 7 längs der Linie 8 - 8 in Fig. 7; und
- Fig. 9: eine schematische Draufsicht von unten auf die Halteklaue aus Fig. 7, mit der Blickrichtung in Richtung des Pfeils 9 in Fig. 7.

Gleiche oder funktional äquivalente Elemente sind in allen Figuren mit denselben Bezugszeichen bezeichnet.

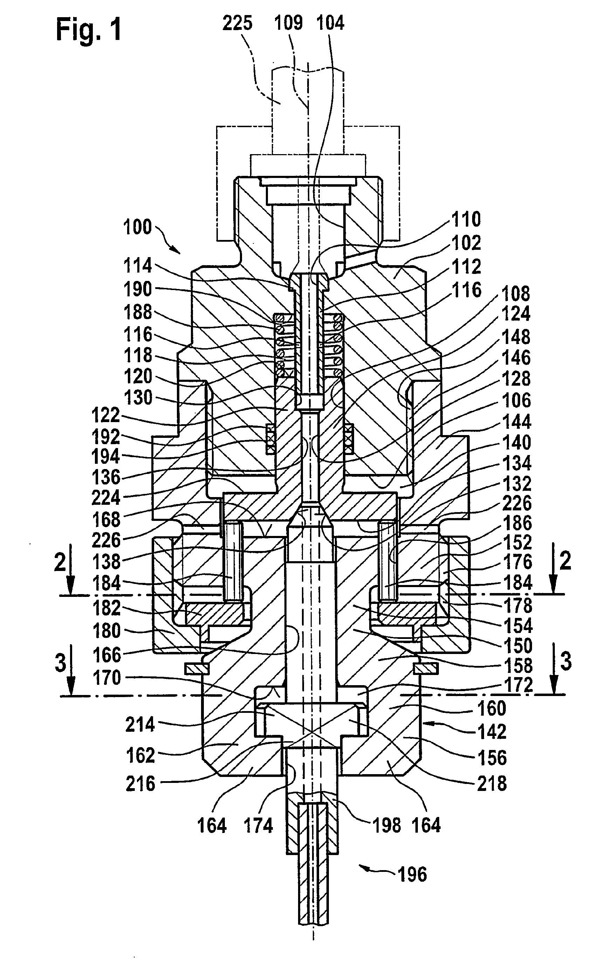

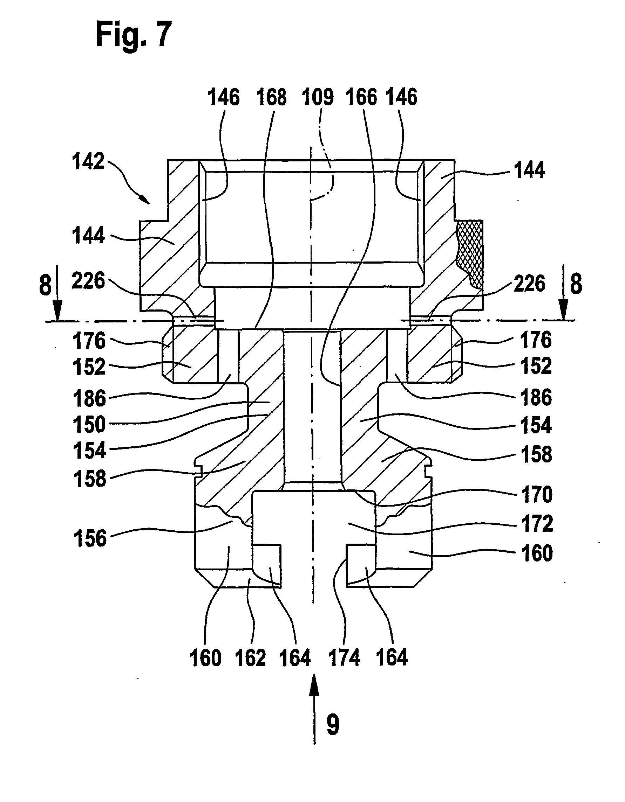

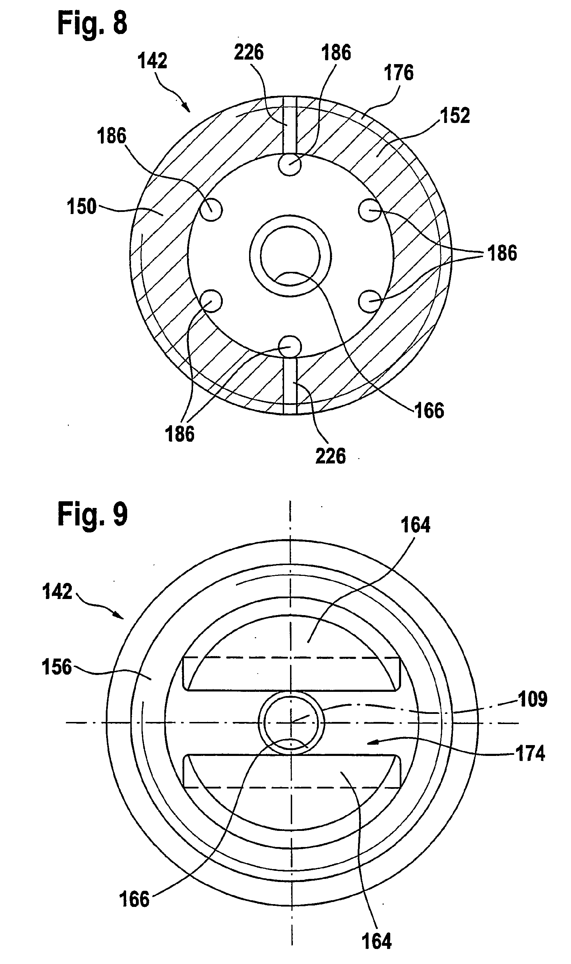

Eine in den Fig. 1 bis 5 und 7 bis 9 dargestellte, als Ganzes mit 100 bezeichnete Halterung für ein mit einem Fluid zu versorgendes Werkzeug, insbesondere ein Wasserwerkzeug, umfaßt einen Druckzylinder 102, der an seinem oberen, anschlußseitigen Ende mit einer gestuften, axialen Anschlußbohrung 104 versehen ist. Von der unteren Stirnseite 106 des Druckzylinders 102 aus erstreckt sich eine mittige, axiale Führungsbohrung 108 längs der Längsachse 109 der Halterung 100 nach oben. Die obere Anschlußbohrung 104 und die untere Führungsbohrung 108 sind über eine gestufte, axiale Verbindungsbohrung 110 miteinander verbunden.

In die Verbindungsbohrung 110 ist eine hohlzylindrische Hülse 112 eingepaßt, welche an ihrem oberen Ende mit einem in radialer Richtung vorstehenden Bund 114 versehen ist, dessen Unterseite an der Stufe der gestuften Verbindungsbohrung 110 anliegt, so daß sich die Hülse 112 nicht durch die Verbindungsbohrung 110 hindurch nach unten in die Führungsbohrung 108 bewegen kann.

Ein in die Führungsbohrung 108 hinein ragender unterer Abschnitt der Hülse 112 ist mit radialen Durchgangsöffnungen 116 versehen, über welche der Innenraum der Hülse 112 mit dem außerhalb der Hülse 112 liegenden Bereich der Führungsbohrung 108 verbunden ist, welcher eine Druckkammer 118 bildet.

Die Druckkammer 118 ist nach unten durch die obere Stirnseite 120 eines Dichtkolbens 122 begrenzt, der einen oberen, zylindrischen Führungsabschnitt 124 aufweist, welcher in der Führungsbohrung 108 in axialer Richtung gleitverschieblich geführt ist, und eine sich nach unten an den Führungsabschnitt 124 anschließende, zylindrische Endplatte 126, welche einen wesentlich größeren Durchmesser aufweist als der Führungsabschnitt 124 und einstückig mit demselben ausgebildet ist.

Der Dichtkolben 122 weist einen mittigen, axialen Fluiddurchgangskanal 128 auf, der einen zylindrischen Eintrittsabschnitt 130, welcher an der oberen Stirnseite 120 des Dichtkolbens 122 mündet, einen konischen Austrittsabschnitt 132, der an der unteren Stirnseite 134 des Dichtkolbens 122 mündet und sich zu derselben hin erweitert, und einen den Eintrittsabschnitt 130 mit dem Austrittsabschnitt 132 verbindenden zylindrischen Verbindungsabschnitt 136, dessen Durchmesser kleiner ist als der Durchmesser des zylindrischen Eintrittsabschnitts 130 und dem kleinsten Durchmesser des konischen Austrittsabschnitts 132 entspricht, umfaßt.

Die seitliche Begrenzungsfläche des konischen Austrittsabschnitts 132 bildet eine im wesentlichen kegelstumpfmantelförmige Dichtfläche 138 des Dichtkolbens 122.

Der Kegel-Öffnungswinkel der Dichtfläche 138 beträgt vorzugsweise ungefähr 60°.

Das untere Ende der Hülse 112 ist in dem Eintrittsabschnitt 130 des Fluiddurchgangskanals 128 aufgenommen, so daß die Anschlußbohrung 104 über die Hülse 112 mit dem Fluiddurchgangskanal 128 verbunden ist.

Das untere Ende des Dichtkolbens 122 mit der Endplatte 126 steht in eine Anschlußkammer 140 vor, welche einerseits durch die untere Stirnseite 106 des Druckzylinders 102 und andererseits durch eine innere Begrenzungswand einer Halteklaue 142 begrenzt ist, welche einen im wesentlichen hohlzylindrischen Verbindungsabschnitt 144 mit einem Innengewinde 146 aufweist, der zur Verbindung mit dem Druckzylinder 102 in ein Außengewinde 148 am unteren Ende des Druckzylinders 102 aufgeschraubt ist.

An den Verbindungsabschnitt 144 der Halteklaue 142 schließt sich nach unten ein Führungsabschnitt 150 mit einem oberen zylindrischen Teilabschnitt 152 und einem mittleren zylindrischen Teilabschnitt 154 an, wobei der mittlere Teilabschnitt 154 einen wesentlich kleineren Durchmesser aufweist als der obere Teilabschnitt 152. An den mittleren Teilabschnitt 154 schließt sich nach unten ein unterer Teilabschnitt 158 des Führungsabschnitts 150 an, der sich nach unten konisch erweitert.

An den unteren Teilabschnitt 158 des Führungsabschnitts 150 der Halteklaue 142 schließt sich nach unten ein als Ganzes mit 156 bezeichneter Halteabschnitt an, welcher einen im wesentlichen zylindrischen oberen Teilabschnitt 160 und einen unteren Teilabschnitt 162, der durch zwei einander gegenüberliegende Rückhalte-Vorsprünge 164 gebildet ist, umfaßt.

Alle vorstehend genannten Elemente der Halteklaue 142 sind einstückig miteinander ausgebildet.

Der Führungsabschnitt 150 und der obere Teilabschnitt 158 der Halteklaue 142 werden von einem zylindrischen, axialen Werkzeugführungskanal 166 durchsetzt, welcher einerseits an der oberen Stirnseite 168 des Führungsabschnitts 150 in die Anschlußkammer 140 und andererseits an der unteren Stirnseite 170 des Führungsabschnitts 150 in eine in dem Halteabschnitt 156 der Halteklaue 142 ausgebildete Aufnahmekammer 172 mündet.

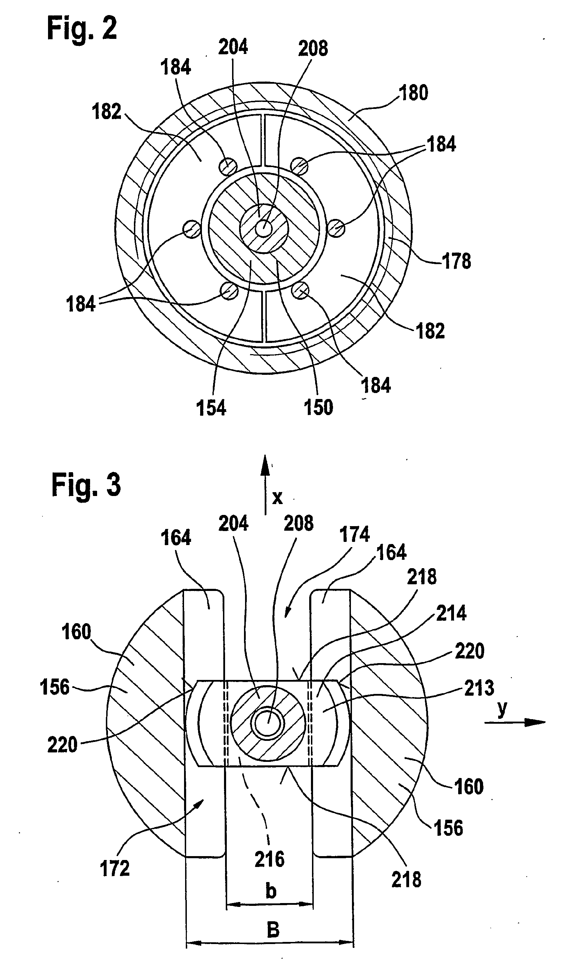

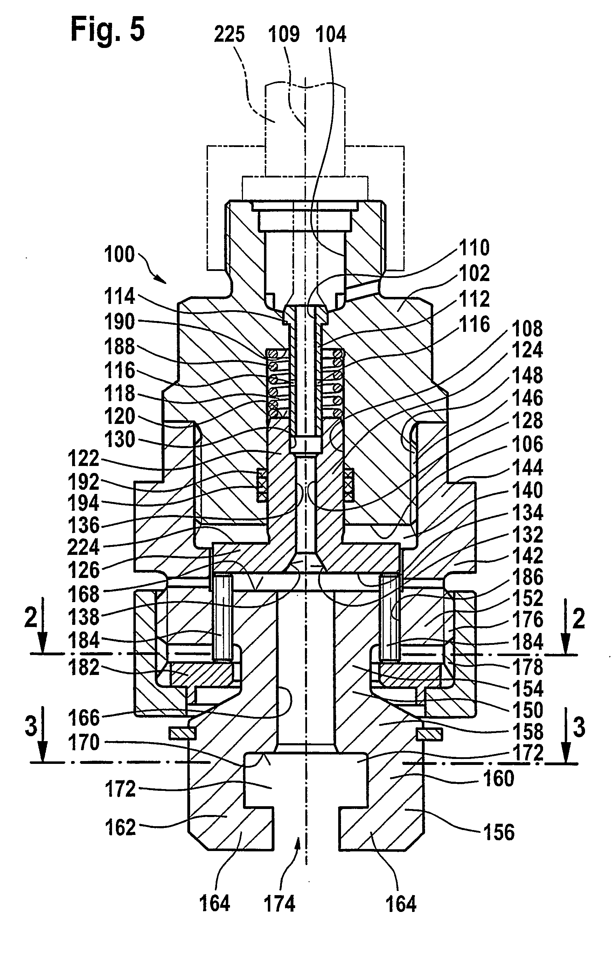

Wie am besten aus den Fig. 3 und 5 zu ersehen ist, weist die Aufnahmekammer 172 einen im wesentlichen rechteckigen Querschnitt auf und erstreckt sich in einer zur Axialrichtung 109 der Halterung 100 senkrechten x-Richtung durch den gesamten Halteabschnitt 156 hindurch.

Auf der dem Werkzeugführungskanal 166 gegenüberliegenden Seite ist die Aufnahmekammer 172 durch die Rückhalte-Vorsprünge 164 begrenzt, zwischen denen ein Werkzeugeinführkanal 174 ausgebildet ist, welcher parallel zu der Aufnahmekammer 172 (d.h. längs der x-Richtung) ausgerichtet ist, jedoch eine Breite b (senkrecht zur x-Richtung) aufweist, welche kleiner ist als die Breite B der Aufnahmekammer 172.

Wie am besten aus Fig. 5 zu ersehen ist, weist der obere Teilabschnitt 152 des Führungsabschnitts 150 der Halteklaue 142 an seinem äußeren Umfang ein Außengewinde 176 auf, auf welches eine mit einem Innengewinde 178 versehene Entspannungsmutter 180 von unten aufgeschraubt ist.

Im Innenraum der Entspannungsmutter ist ein geteilter Ring 182 aufgenommen, welcher den mittleren Teilabschnitt 154 des Führungsabschnitts 150 ringförmig umgibt und sich nach unten an der Entspannungsmutter 180 abstützt.

Der Ring 182 steht über mehrere, beispielsweise sechs, Distanzstifte 184, welche sich durch jeweils eine axiale Durchgangsbohrung 186 in dem oberen Teilabschnitt 152 des Führungsabschnitts 150 hindurch erstrecken, mit der unteren Stirnseite 134 des Dichtkolbens 122 in Kontakt.

In der Druckkammer 118 des Druckzylinders 102 ist eine Schraubenfeder 188 angeordnet, welche die Hülse 112 umgibt und sich einerseits an der oberen Begrenzungswand 190 der Druckkammer 118 und andererseits an der oberen Stirnseite 120 des Dichtkolbens 122 abstützt.

Durch diese Schraubenfeder 188 wird der Dichtkolben 122 in axialer Richtung nach unten vorgespannt.

Durch Aufschrauben der Entspannungsmutter 180 auf das Außengewinde 176 des Führungsabschnitts 150 der Halteklaue 142, wodurch sich die Entspannungsmutter 180 nach oben bewegt, kann der Dichtkolben 122, welcher sich über die Distanzstifte 184 und den Ring 182 an der Entspannungsmutter 180 abstützt, gegen die Federkraft der Schraubenfeder 188 in axialer Richtung nach oben bewegt werden.

Die Führungsbohrung 108 des Druckzylinders 102, in welcher der Dichtkolben 122 in axialer Richtung verschieblich geführt ist, ist mit einer Ringnut 192 versehen, in welcher ein Dichtungsring 194 angeordnet ist. Der Dichtungsring 194 liegt einerseits am Druckzylinder 102 und andererseits am äußeren Umfang des Führungsabschnitts 124 des Dichtkolbens 122 an und verhindert so, daß Fluid von der Druckkammer 118 längs der Außenseite des Dichtkolbens 122 in die Anschlußkammer 140 gelangt.

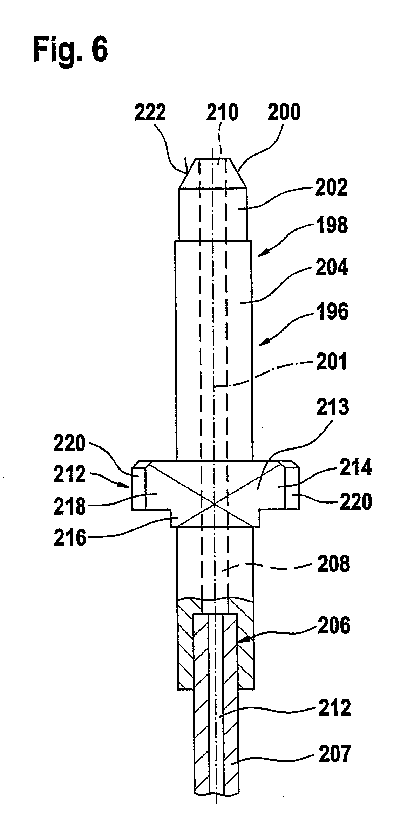

Das in der vorstehend beschriebenen Halterung 100 zu halternde Werkzeug 196 ist insbesondere in Fig. 6 dargestellt.

Das Werkzeug 196 umfaßt einen als Ganzes mit 198 bezeichnetes Werkzeuganschlußstück, welches einen konischen Dichtungsabschnitt 200, einen sich an den Dichtungsabschnitt 200 in der Axialrichtung 201 des Anschlußstücks 198 anschließenden ersten zylindrischen Abschnitt 202 und einen sich an den ersten zylindrischen Abschnitt in der Axialrichtung 201 des Anschlußstücks 198 anschließenden zweiten zylindrischen Abschnitt 204 umfaßt.

Der Außendurchmesser des zweiten zylindrischen Abschnitts 204 des Werkzeuganschlußstücks 198 ist geringfügig kleiner als der Durchmesser des Werkzeugführungskanals 166 der Halteklaue 142, so daß das Werkzeuganschlußstück 198 nach dem Einführen desselben in die Halteklaue 142 in dem Werkzeugführungskanal 166 gleitverschieblich geführt ist.

Der Außendurchmesser des ersten zylindrischen Abschnitts 202 des Werkzeuganschlußstücks 198 ist etwas kleiner als der Außendurchmesser des zweiten zylindrischen Abschnitts 204.

An dem dem Dichtungsabschnitt 200 abgewandten Ende des zweiten zylindrischen Abschnitts 204 ist eine Aufnahme 206 für ein Anschlußende eines (nur abschnittsweise dargestellten) Funktionsteils 207 des Werkzeugs 196 vorgesehen.

In die Aufnahme 206 mündet ein Fluiddurchgangskanal 208, welcher das Werkzeuganschlußstück 198 in axialer Richtung durchsetzt. Über diesen Fluiddurchgangskanal 208 kann das dem Werkzeug 196 zuzuführende Fluid von einer an dem Dichtungsabschnitt 200 vorgesehenen Eintrittsöffnung 210 zu der Aufnahme 206 gelangen, wo es in einen in dem Funktionsteil 207 vorgesehenen Fluiddurchgangskanal 212 eintreten und von dort aus seiner Verwendung in dem Werkzeug zugeführt werden kann.

Insbesondere kann vorgesehen sein, daß das Werkzeug 196 als eine Hochdruck-Sprühlanze ausgebildet ist, welche eine (nicht dargestellte) Lanzenspitze mit einer Austrittsdüse umfaßt, durch welche das dem Werkzeug 196 zugeführte Fluid, insbesondere Wasser, unter hohem Druck austritt und zum Entgraten und/oder zum Reinigen eines Werkstücks verwendet werden kann.

An dem zweiten zylindrischen Abschnitt 204 des Werkzeuganschlußstücks 198 ist ferner ein in radialer Richtung abstehender Bund 213 vorgesehen, welcher einen dem Dichtungsabschnitt 200 zugewandten Anschlagabschnitt 214 und einen der Aufnahme 206 für den Funktionsteil 207 zugewandten Drehverhinderungsabschnitt 216 umfaßt.

Der Drehverhinderungsabschnitt 216 weist die Form eines Quaders mit quadratischem Querschnitt auf. Die Kantenlänge des Drehverhinderungsabschnitts 216 ist geringfügig kleiner als die Breite b des Werkzeugeinführkanals 174 der Halteklaue 142.

Der Drehverhinderungsabschnitt 216 weist die Form eines Zweiflachs mit zwei einander gegenüberliegenden ebenen Begrenzungsflächen 218 (siehe beispielsweise Fig. 3) auf, welche über zwei einander gegenüberliegende, kreisabschnittsförmig gekrümmte Begrenzungsflächen 220 miteinander verbunden sind. Der Abstand der parallel zueinander ausgerichteten ebenen Begrenzungsflächen 218 entspricht der Kantenlänge des Drehverhinderungsabschnitts 216.

Die größte Ausdehnung des Anschlagabschnitts 214 parallel zu den ebenen Begrenzungsflächen 218 ist geringfügig kleiner als die Breite B der Aufnahmekammer 172 der Halteklaue 142.

Die im wesentlichen kegelstumpfförmige Umfangsfläche des konischen Dichtungsabschnitts 200 des Werkzeuganschlußstücks 198 bildet eine Dichtfläche 222.

Der Kegel-Öffnungswinkel der Dichtfläche 222 des Werkzeuganschlußstücks 198 ist etwas kleiner als der Kegel-Öffnungswinkel der Dichtfläche 138 des Dichtkolbens 122, vorzugsweise um ungefähr 2° kleiner, und beträgt beispielsweise ungefähr 58°.

Die vorstehend beschriebene Halterung 100 zum Haltern des Werkzeugs 196 funktioniert wie folgt:

Zum Einführen des Werkzeugs 196 in die Halterung 100 wird zunächst der Dichtkolben 122 aus der in Fig. 5 dargestellten Arbeitsstellung in eine Ruhestellung bewegt, in welcher die Oberseite 224 der Endplatte 126 an der unteren Stirnseite 106 des Druckzylinders 102 anliegt, indem die Entspannungsmutter 180 entsprechend weit auf das Außengewinde 176 des Führungsabschnitts 150 der Halteklaue 142 aufgeschraubt wird und so der Dichtkolben 122 gegen die Federkraft der Schraubenfeder 188 in axialer Richtung nach oben gedrückt wird.

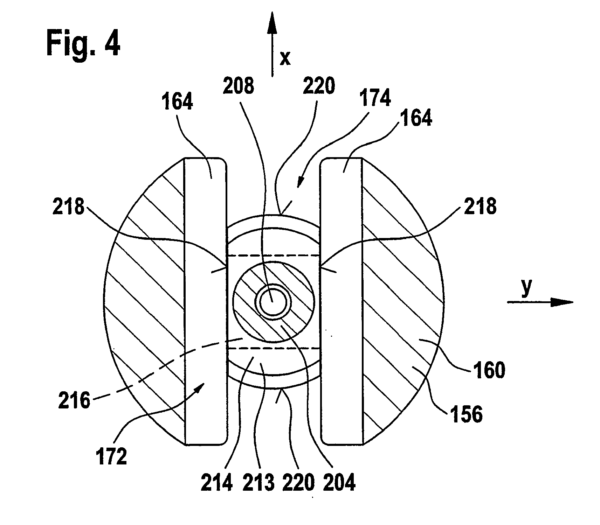

Anschließend wird das Werkzeug 196 mit dem Werkzeuganschlußstück 198 voran in der in Fig. 4 dargestellten Orientierung, in welcher die ebenen Begrenzungsflächen 218 des Anschlagabschnitts 214 parallel zu der x-Richtung der Halterung 100 ausgerichtet sind, so weit durch den Werkzeugeinführkanal 174 und den Werkzeugführungskanal 150 in die Anschlußkammer 140 eingeschoben, bis der Anschlagabschnitt 214 des Werkzeuganschlußstücks 198 an der unteren Stirnseite des Führungsabschnitts 150 der Halteklaue 142 anschlägt.

Anschließend wird das Werkzeuganschlußstück 198 um einen Winkel von 90° um seine Längsachse 201 gedreht und in Richtung der Längsachse 201 so weit zurückbewegt, daß der Drehverhinderungsabschnitt 216 zwischen den Rückhalte-Vorsprüngen 164 der Halteklaue 142 zu liegen kommt und der Anschlagabschnitt 214 an den Rückhalte-Vorsprüngen 164 anliegt.

Nun wird die Entspannungsmutter 180 so weit aus dem Außengewinde 176 des Führungsabschnitts 150 der Halteklaue 142 herausgedreht und somit in axialer Richtung nach unten bewegt, bis der Dichtkolben 122, welcher durch die Federkraft der Schraubenfeder 188 in axialer Richtung nach unten zu dem Dichtungsabschnitt 200 des Werkzeuganschlußstücks 198 hin bewegt wird, mit seiner konischen Dichtfläche 138 an der ebenfalls konischen Dichtfläche 222 des Werkzeuganschlußstücks 198 anliegt.

In dieser Stellung wird das Werkzeuganschlußstück 198 durch die von dem Dichtkolben 122 auf den Dichtungsabschnitt 200 übertragene Rückstellkraft der Schraubenfeder 188 mit seinem Anschlagabschnitt 214 gegen die Rückhalte-Vorsprünge 164 gedrückt, so daß das Werkzeuganschlußstück 198 in seiner axialen Stellung relativ zu der Halteklaue 142 fixiert ist.

Da in dieser Stellung der Drehverhinderungsabschnitt 216 mit zwei seiner Begrenzungsflächen an seitlichen Begrenzungsflächen der Rückhalte-Vorsprünge 164 anliegt, ist das Werkzeuganschlußstück 198 in dieser Stellung auch gegen ein Verdrehen um seine Längsachse gesichert.

In diesem Zustand ist die Kombination aus Halterung 100 und Werkzeug 196 betriebsbereit.

Die Halterung 100 ist an ihrem oberen Ende an eine (in den Fig. 1 und 5 in gebrochenen Linien dargestellte) Fluidzuführleitung 225 angeschlossen, durch welche der Anschlußbohrung 104 der Halterung 100 ein Fluid, beispielsweise Wasser mit oder ohne Zusätzen, unter einem hohen Druck von beispielsweise 1500 bar zuführbar ist.

Nach Öffnen der Fluidzuführleitung gelangt das unter dem hohen Druck stehende Fluid durch die Hülse 112 und die radialen Durchgangsöffnungen 116 in deren Mantel in die Druckkammer 118 des Druckzylinders 102, so daß die obere Stirnseite 120 des Dichtkolbens 122 von dem Fluid mit dem hohen Druck beaufschlagt wird.

Der Dichtkolben 122 wird dadurch in axialer Richtung gegen den Dichtungsabschnitt 200 des Werkzeuganschlußstücks 198 gepreßt, wobei der resultierende Anpreßdruck von dem Verhältnis der Projektion der Fläche der oberen Stirnseite 120 des Dichtkolbens 122 zu der Projektion der Fläche, an welcher der Dichtkolben 122 und der Dichtungsabschnitt 200 aneinander anliegen, auf eine zur Axialrichtung der Halterung 100 senkrechte Ebene abhängt.

Der Dichtkolben 122 und das Werkzeuganschlußstück 198 bestehen aus einem metallischen Material, so daß die gegeneinander gepreßten Dichtflächen 138 und 222 metallisch gegeneinander abgedichtet sind.

Das dem Werkzeug 196 zuzuführende Fluid gelangt daher von dem Fluiddurchgangskanal 128 des Dichtkolbens 122 im wesentlichen verlustfrei oder zumindest verlustarm in den Fluiddurchgangskanal 208 des Werkzeuganschlußstücks 128 und von dort weiter in den Fluiddurchgangskanal 212 des Funktionsteils 207 des Werkzeugs 196.

Falls vor dem Eintreten der vollen Abdichtwirkung oder während des Betriebes des Werkzeugs 196 an den Dichtflächen 138, 222 Fluid in den unterhalb des Dichtkolbens 122 liegenden Bereich der Anschlußkammer 140 gelangen sollte, so kann dieses Fluid durch in dem Verbindungsabschnitt 144 der Halteklaue 142 vorgesehene radiale Durchgangsbohrungen 226 nach außen entweichen, so daß sich in der Anschlußkammer 140 kein Gegendruck aufbauen kann, welcher die Anpreßkraft, mit der der Dichtkolben 122 gegen den Dichtungsabschnitt 200 des Werkzeuganschlußstücks 198 gepreßt wird, verringern würde.

Um das Werkzeuganschlußstück 198 wieder aus der Halterung 100 zu entnehmen, nachdem die Fluidzuführleitung 225 wieder geschlossen worden ist, wird die Entspannungsmutter 180 weiter auf das Außengewinde 176 des Führungsabschnitts 150 der Halteklaue 142 aufgedreht und somit in axialer Richtung nach oben bewegt, so daß der Dichtkolben 122 durch den Ring 182 und die Distanzstifte 184 vom Dichtungsabschnitt 200 des Werkzeuganschlußstücks 198 abgehoben wird.

Nachdem der Dichtkolben 122 somit von der Arbeitsstellung in die Ruhestellung zurückbewegt wurde, kann das Werkzeuganschlußstück 198 in axialer Richtung nach oben bewegt werden, so daß der Drehverhinderungsabschnitt 216 aus dem Werkzeugeinführkanal 174 heraus in die Aufnahmekammer 172 eintritt. In der Aufnahmekammer 172 kann der Drehverhinderungsabschnitt 216 und damit das Werkzeuganschlußstück 198 um 90° um seine Längsachse 201 in die Einführ- oder Ausführstellung (siehe Fig. 4) zurückgedreht werden, in welcher die ebenen Begrenzungsflächen 218 des Anschlagabschnitts 214 parallel zu dem Werkzeugeinführkanat 174 ausgerichtet sind.

Anschließend kann das Werkzeuganschlußstück 198 in axialer Richtung aus der Halteklaue 142 herausbewegt werden.

Durch die konische Gestalt des Dichtungsabschnitts 200 des Werkzeuganschlußstücks 198 ist gewährleistet, daß das Werkzeuganschlußstück 198 auch dann problemlos von dem Dichtkolben 122 gelöst werden kann, wenn es beim Einführen oder während des Betriebs des Werkzeugs 196 bleibend verformt worden sein sollte.

Für eine leichte Lösbarkeit des Werkzeuganschlußstücks 198 von dem Dichtkolben 122 ist es ferner von Vorteil, daß der erste zylindrische Abschnitt 202 des Werkzeuganschlußstücks 198 einen etwas kleineren Außendurchmesser aufweist als der zweite zylindrische Abschnitt 204.

## Patentansprüche

1. Halterung für ein mit einem Fluid zu versorgendes Werkzeug (196), insbesondere ein Wasserwerkzeug,
wobei die Halterung (100) eine Aufnahme zum Aufnehmen eines Anschlussstücks (198) des Werkzeugs (196), ein Dichtelement (122), das in einer Arbeitsstellung an dem Anschlussstück (198) anliegt, und eine Vorspanneinrichtung zum Vorspannen des Dichtelements (122) gegen das Anschlussstück (198) in der Arbeitsstellung umfasst,
**dadurch gekennzeichnet, dass**
die Halterung (100) eine Bewegungseinrichtung zum Bewegen des Dichtelements (122) von der Arbeitsstellung in eine Ruhestellung, in der das Dichtelement (122) nicht an dem Anschlussstück (198) anliegt, umfasst.

2. Halterung nach Anspruch 1, **dadurch gekennzeichnet, dass** die Aufnahme so ausgebildet ist, dass das Anschlussstück (198) in der Arbeitsstellung gegen ein Herausbewegen aus der Halterung (100) gesichert ist.

3. Halterung nach einem der Ansprüche 1 oder 2, **dadurch gekennzeichnet, dass** die Aufnahme so ausgebildet ist, dass das Anschlussstück (198) in der Arbeitsstellung gegen ein Drehen des Anschlussstücks (198) um seine Längsachse (201) relativ zu der Halterung (100) gesichert ist.

4. Halterung nach einem der Ansprüche 1 bis 3, **dadurch gekennzeichnet, dass** die Vorspanneinrichtung ein Federelement (188) umfasst.

5. Halterung nach einem der Ansprüche 1 bis 4, **dadurch gekennzeichnet, dass** das Dichtelement (122) in der Halterung (100) verschieblich geführt ist.

6. Halterung nach einem der Ansprüche 1 bis 4, **dadurch gekennzeichnet, dass** das Dichtelement (122) eine Dichtfläche (138) aufweist, die in der Arbeitsstellung an einer Dichtfläche (222) des Anschlussstücks (198) anliegt.

7. Halterung nach Anspruch 6, **dadurch gekennzeichnet, dass** die Dichtfläche (138) des Dichtelements (122) im wesentlichen kegelstumpfförmig ausgebildet ist.

8. Halterung nach Anspruch 7, **dadurch gekennzeichnet, dass** die Dichtfläche (138) des Dichtelements (122) einen Kegel-Öffnungswinkel von ungefähr 40° bis ungefähr 80°, vorzugsweise von ungefähr 50° bis ungefähr 70°, aufweist.

9. Halterung nach einem der Ansprüche 1 bis 8, **dadurch gekennzeichnet, dass** das Dichtelement (122) einen Fluiddurchgangskanal (128), der von dem dem Werkzeug (196) zuzuführenden Fluid durchströmbar ist, aufweist.

10. Halterung nach einem der Ansprüche 1 bis 9, **dadurch gekennzeichnet, dass** das Dichtelement (122) eine von dem dem Werkzeug (196) zuzuführenden Fluid beaufschlagbare Druckfläche (120) aufweist.

11. Halterung nach Anspruch 10, **dadurch gekennzeichnet, dass** die Projektion der Druckfläche (120) des Dichtelements (122) auf eine zur Verschiebungsrichtung des Dichtelements (122) senkrechte Ebene größer ist als die Projektion einer Dichtfläche (138) des Dichtelements (122), mit welcher das Dichtelement (122) an einer Dichtfläche (122) des Anschlussstücks (198) in der Arbeitsstellung anliegt, auf eine zur Verschiebungsrichtung des Dichtelements (122) senkrechte Ebene.

12. Halterung nach Anspruch 11, **dadurch gekennzeichnet, dass** die Projektion der Druckfläche (120) des Dichtelements (122) mindestens zweimal, vorzugsweise mindestens dreimal, so groß ist wie die Projektion der Dichtfläche (138) des Dichtelements (122) auf eine zur Verschiebungsrichtung des Dichtelements (122) senkrechte Ebene.

13. Halterung nach einem der Ansprüche 1 bis 12, **dadurch gekennzeichnet, dass** die Bewegungseinrichtung eine Entspannungsmutter (180) umfasst.

14. Halterung nach einem der Ansprüche 1 bis 13, **dadurch gekennzeichnet, dass** das Dichtelement (122) mit einem Fluid unter einem Druck von mindestens 100 bar, vorzugsweise von mindestens 1000 bar, beaufschlagbar ist.

15. Kombination aus einer Halterung nach einem der Ansprüche 1 bis 14 und einem mit einem Fluid zu versorgenden Werkzeug, insbesondere einem Wasserwerkzeug, das in die Aufnahme der Halterung (100) einführbar, in der Halterung (100) in eine Arbeitsstellung bringbar und in der Arbeitsstellung in Kontakt mit dem Dichtelement (122) der Halterung (100) bringbar ist.

16. Kombination nach Anspruch 15, **dadurch gekennzeichnet, dass** das Werkzeug (196) eine Dichtfläche (222) aufweist, mit welcher das Werkzeug (196) in der Arbeitsstellung an einer Dichtfläche (138) des Dichtelements (122) der Halterung (100) anliegt.

17. Kombination nach Anspruch 16, **dadurch gekennzeichnet, dass** die Dichtfläche (222) des Werkzeugs (196) im wesentlichen kegelstumpfförmig ausgebildet ist.

18. Kombination nach Anspruch 17, **dadurch gekennzeichnet, dass** die Dichtfläche (222) des Werkzeugs (196) einen Kegel-Öffnungswinkel von ungefähr 40° bis ungefähr 80°, vorzugsweise von ungefähr 50° bis ungefähr 70°, aufweist.

19. Kombination nach einem der Ansprüche 16 bis 18, **dadurch gekennzeichnet, dass** die Dichtfläche (222) an einem im wesentlichen kegelstumpfförmigen Endbereich (200) des Werkzeugs (196) angeordnet ist.

20. Kombination nach Anspruch 19, **dadurch gekennzeichnet, dass** das Werkzeug (196) einen ersten im wesentlichen zylindrischen Abschnitt (202) mit einem ersten Durchmesser und einen zweiten im wesentlichen zylindrischen Abschnitt (204) mit einem zweiten Durchmesser aufweist, wobei der erste zylindrische Abschnitt (202) zwischen dem zweiten zylindrischen Abschnitt (204) und dem im wesentlichen kegelstumpfförmigen Endbereich (200) des Werkzeugs (196) angeordnet ist und der zweite Durchmesser größer ist als der erste Durchmesser.

21. Kombination nach einem der Ansprüche 15 bis 20, **dadurch gekennzeichnet, dass** das Werkzeug (196) einen nicht-rotationssymmetrischen Bund (214) umfasst, der in der Arbeitsstellung ein Hinausbewegen des Anschlussstücks (198) des Werkzeugs (196) aus der Halterung (100) in der Längsrichtung (201) des Anschlussstücks (198) verhindert.

22. Kombination nach einem der Ansprüche 15 bis 21, **dadurch gekennzeichnet, dass** das Werkzeug (196) einen nicht-rotationssymmetrischen Bund (216) umfasst, der in der Arbeitsstellung ein Drehen des Anschlussstücks (198) um dessen Längsachse (201) relativ zu der Halterung (100) verhindert.

## Claims

1. Holder for a tool (196), in particular a water tool, to be provided with a fluid, wherein the holder (100) comprises a receiver for receiving a connection piece (198) of the tool (196), a sealing element (122) which abuts the connection piece (198) in a working position and a biasing device for biasing the sealing element (122) against the connection piece (198) in the working position, **characterised in that** the holder (100) comprises a movement device for moving the sealing element (122) from the working position into a rest position, in which the sealing element (122) does not engage the connection piece (198).

2. Holder according to claim 1, **characterised in that** the receiver is designed in such a way that the connection piece (198) is secured in the working position against moving out of the holder (100).

3. Holder according to either of claims 1 or 2, **characterised in that** the receiver is designed in such a way that the connection piece (198) is secured in the working position against rotation of the connection piece (198) about its longitudinal axis (201) relative to the holder (100).

4. Holder according to any one of claims 1 to 3, **characterised in that** the biasing device comprises a spring element (188).

5. Holder according to any one of claims 1 to 4, **characterised in that** the sealing element (122) is displaceably guided in the holder (100).

6. Holder according to any one of claims 1 to 4, **characterised in that** the sealing element (122) has a sealing face (138) which in the working position abuts a sealing face (222) of the connection piece (198).

7. Holder according to claim 6, **characterised in that** the sealing face (138) of the sealing element (122) is substantially truncated cone-shaped in design.

8. Holder according to claim 7, **characterised in that** the sealing face (138) of the sealing element (122) has a cone aperture angle of about 40° to about 80°, preferably from about 50° to about 70°.

9. Holder according to any one of claims 1 to 8, **characterised in that** the sealing element (122) has a fluid through-channel (128), through which the fluid fed to the tool (196) can flow.

10. Holder according to any one of claims 1 to 9, **characterised in that** the sealing element (122) has a pressure face (120) which can be loaded by the fluid to be fed to the tool (196).

11. Holder according to claim 10, **characterised in that** the projection of the pressure face (120) of the sealing element (122) onto a plane perpendicular to the direction of displacement of the sealing element (122) is greater than the projection of a sealing face (138) of the sealing element (122), with which the sealing element (122) engages a sealing face (122) of the connection piece (198) in the working position, onto a plane perpendicular to the direction of displacement of the sealing element (122).

12. Holder according to claim 11, **characterised in that** the projection of the sealing face (120) of the sealing element (122) is at least twice, preferably at least three times as great as the projection of the sealing face (138) of the sealing element (122) onto a plane perpendicular to the direction of displacement of the sealing element (122).

13. Holder according to any one of claims 1 to 12, **characterised in that** the movement device comprises a relief nut (180).

14. Holder according to any one of claims 1 to 13, **characterised in that** the sealing element (122) can be loaded with a fluid at a pressure of at least 100 bar, preferably of at least 1,000 bar.

15. A combination of a holder according to any one of claims 1 to 14 and a tool, in particular a water tool, to be supplied with a fluid, which tool can be inserted into the receiver of the holder (100), can be brought into a working position in the holder (100) and can be brought into contact with the sealing element (122) of the holder (100) in the working position.

16. A combination according to claim 15, **characterised in that** the tool (196) has a sealing face (222), with which the tool (196) engages a sealing face (138) of the sealing element (122) of the holder (100) in the working position.

17. A combination according to claim 16, **characterised in that** the sealing face (222) of the tool (196) is substantially truncated cone-shaped in design.

18. A combination according to claim 17, **characterised in that** the sealing face (222) of the tool (196) has a cone aperture angle of about 40° to about 80°, preferably of about 50° to about 70°.

19. A combination according to any one of claims 16 to 18, **characterised in that** the sealing face (222) is arranged on a substantially truncated cone-shaped end region (200) of the tool (196).

20. A combination according to claim 19, **characterised in that** the tool (196) has a first substantially cylindrical section (202) with a first diameter and a second substantially cylindrical section (204) with a second diameter, the first cylindrical section (202) being arranged between the second cylindrical section (204) and the substantially truncated cone-shaped end region (200) of the tool (196) and the second diameter is greater than the first diameter.

21. A combination according to any one of claims 15 to 20, **characterised in that** the tool (196) comprises a non-rotationally symmetrical collar (214) which, in the working position, prevents a movement of the connection piece (198) of the tool (196) out of the holder (100) in the longitudinal direction (201) of the connection piece (198).

22. A combination according to any one of claims 15 to 21, **characterised in that** the tool (196) comprises a non-rotationally symmetrical collar (216) which, in the working position, prevents a rotation of the connection piece (198) about its longitudinal axis (201) relative to the holder (100).

## Revendications

1. Support pour outil (196) à alimenter en fluide, notamment un outil à jet d'eau,
le support (100) comportant un logement servant à recevoir une pièce de raccordement (198) de l'outil (196), un joint (122), qui s'appuie sur la pièce de raccordement (198) dans une position de travail, et un dispositif de précontrainte pour serrer le joint (122) contre la pièce de raccordement (198) dans la position de travail,
**caractérisé en ce que**
le support (100) comprend un dispositif de déplacement pour déplacer le joint (122) de la position de travail à une position de repos dans laquelle le joint (122) ne s'appuie pas sur la pièce de raccordement (198).

2. Support selon la revendication 1, **caractérisé en ce que** le logement est réalisé de telle sorte que la pièce de raccordement (198) soit bloquée dans la position de travail pour éviter qu'elle ne sorte du support (100).

3. Support selon l'une quelconque des revendications 1 ou 2, **caractérisé en ce que** le logement est réalisé de telle sorte que la pièce de raccordement (198) soit bloquée, dans la position de travail, pour éviter une rotation de la pièce de raccordement (198) autour de son axe longitudinal (201) par rapport au support (100).

4. Support selon l'une quelconque des revendications 1 à 3, **caractérisé en ce que** le dispositif de précontrainte comporte un élément élastique (188).

5. Support selon l'une quelconque des revendications 1 à 4, **caractérisé en ce que** le joint (122) est posé de manière à pouvoir être déplacé dans le support (100).

6. Support selon l'une quelconque des revendications 1 à 4, **caractérisé en ce que** le joint (122) comporte une surface d'étanchéité (138) qui est en contact, dans la position de travail, avec une surface d'étanchéité (222) de la pièce de raccordement (198).

7. Support selon la revendication 6, **caractérisé en ce que** la surface d'étanchéité (138) du joint (122) est réalisée de manière sensiblement tronconique.

8. Support selon la revendication 7, **caractérisé en ce que** la surface d'étanchéité (138) du joint (122) présente un angle d'ouverture conique compris entre environ 40° et 80°, de préférence entre environ 50° et 70°.

9. Support selon l'une quelconque des revendications 1 à 8, **caractérisé en ce que** le joint (122) comporte un canal de passage du fluide (128) qui peut être parcouru par le fluide à amener vers l'outil (196).

10. Support selon l'une quelconque des revendications 1 à 9, **caractérisé en ce que** le joint (122) comporte une surface de pression (120) pouvant être alimentée par le fluide à amener vers l'outil (196).

11. Support selon la revendication 10, **caractérisé en ce que** la saillie de la surface de pression (120) du joint (122), sur un plan perpendiculaire au sens du déplacement du joint (122), est plus longue que la saillie d'une surface d'étanchéité (138) du joint (122) au moyen de laquelle le joint (122) s'appuie sur une surface d'étanchéité (122) de la pièce de raccordement (198) dans la position de travail, sur un plan perpendiculaire au sens du déplacement du joint (122).

12. Support selon la revendication 11, **caractérisé en ce que** la saillie de la surface de pression (120) du joint (122) est au moins deux fois plus longue, de préférence au moins trois fois plus longue, que la saillie de la surface d'étanchéité (138) du joint (122) sur un plan perpendiculaire au sens du déplacement du joint (122).

13. Support selon l'une quelconque des revendications 1 à 12, **caractérisé en ce que** le dispositif de déplacement comporte un écrou de détente (180).

14. Support selon l'une quelconque des revendications 1 à 13, **caractérisé en ce que** le joint (122) peut être alimenté en un fluide à une pression d'au moins 100 bars, de préférence d'au moins 1000 bars.

15. Combinaison composée d'un support selon l'une quelconque des revendications 1 à 14 et d'un outil à alimenter en fluide, notamment d'un outil à jet d'eau, qui peut être introduit dans le logement du support (100), amené dans une position de travail dans le support (100) et amené en contact avec le joint (122) du support (100) dans la position de travail.

16. Combinaison selon la revendication 15, **caractérisée en ce que** l'outil (196) comporte une surface d'étanchéité (222) au moyen de laquelle l'outil (196) s'appuie, dans la position de travail, sur une surface d'étanchéité (138) du joint (122) du support (100).

17. Combinaison selon la revendication 16, **caractérisée en ce que** la surface d'étanchéité (222) de l'outil (196) est réalisée de manière sensiblement tronconique.

18. Combinaison selon la revendication 17, **caractérisée en ce que** la surface d'étanchéité (222) de l'outil (196) présente un angle d'ouverture conique compris entre environ 40 et 80°, de préférence entre environ 50° et 70°.

19. Combinaison selon l'une quelconque des revendications 16 à 18, **caractérisée en ce que** la surface d'étanchéité (222) est disposée sur une zone d'extrémité (200) sensiblement tronconique de l'outil (196).

20. Combinaison selon la revendication 19, **caractérisée en ce que** l'outil (196) comporte une première section sensiblement cylindrique (202) avec un premier diamètre et une seconde section sensiblement cylindrique (204) avec un second diamètre, la première section cylindrique (202) étant disposée entre la seconde section cylindrique (204) et la zone d'extrémité (200) sensiblement tronconique de l'outil (196) et le second diamètre étant plus grand que le premier diamètre.

21. Combinaison selon l'une quelconque des revendications 15 à 20, **caractérisée en ce que** l'outil (196) comporte un épaulement (214) sans symétrie de révolution qui empêche, dans la position de travail, que la pièce de raccordement (198) de l'outil (196) ne sorte du support (100) dans le sens longitudinal (201) de la pièce de raccordement (198).

22. Combinaison selon l'une quelconque des revendications 15 à 21, **caractérisée en ce que** l'outil (196) comporte un épaulement (216) sans symétrie de révolution qui empêche, dans la position de travail, que la pièce de raccordement (198) ne tourne autour de son axe longitudinal (201) par rapport au support (100).
